# EUROPÄISCHE PATENTSCHRIFT

(11) **EP 3 379 091 B1**
(45) Veröffentlichungstag und Bekanntmachung des Hinweises auf die Patenterteilung: **20.09.2023**
(21) Anmeldenummer: 18160966.0
(22) Anmeldetag: 09.03.2018
(51) Int. Cl.: F16B 2/08, B60K 15/067, B60K 15/07

(54) **BEFESTIGUNGSVORRICHTUNG FÜR EIN SPANNBAND**
MOUNTING DEVICE FOR A CLAMP
DISPOSITIF DE FIXATION POUR UNE BANDE DE SERRAGE

(30) Priorität: 25.03.2017 DE 102017002885
(43) Veröffentlichungstag der Anmeldung: 26.09.2018
(73) Patentinhaber: MAN Truck & Bus SE, 80995 München (DE)
(72) Erfinder: Vogt, Moritz, 85757 Karlsfeld (DE); Knebel, Sebastian, 82205 Gilching (DE); Ferwagner, Alexander, 85241 Hebertshausen (DE)
(74) Vertreter: v. Bezold & Partner Patentanwälte - PartG mbB

(56) Entgegenhaltungen:
- WO-A1-2018/017006
- AT-B- 136 899
- DE-A1-102012 004 319
- DE-A1-102012 023 159
- GB-A- 621 406

## Beschreibung

Die Erfindung betrifft eine Befestigungsvorrichtung für ein Spannband eines Kraftstofftanks oder eines Drucklufttanks zum Befestigen des Kraftstofftanks oder des Drucklufttanks an einem Rahmen eines Kraftfahrzeugs und ein Kraftfahrzeug mit einer solchen Befestigungseinrichtung.

Im Stand der Technik ist eine Vielzahl von Befestigungsvorrichtungen (Verschlusseinrichtungen) für Spannbänder bekannt. Spannbänder können genutzt werden, um Behälter, wie beispielsweise Kraftstofftanks oder Druckluftbehälter, an einem Rahmen eines Kraftfahrzeugs sicher zu befestigen. Dazu umschlingt das Spannband den Behälter und ist gleichzeitig an dem Rahmen befestigt.

Die GB 621 406 A offenbart eine gattungsfremde Rohr- oder Schlauchschelle aufweisend ein Paar zylinderförmige Schwenkzapfen, die durch eine Spannschraube miteinander verbunden sind. Ein Metallband ist um beide Schwenkzapfen geschlungen und umgibt den zu klemmenden Schlauch. Einer der Schwenkzapfen greift in das freie Ende der Spannschraube ein, und ist zu diesem Zweck geschlitzt mit einer Nut ausgeführt. Eine weitere gattungsfremde Schlauchschelle ist aus der AT 136 899 B bekannt.

Die DE 10 2012 004319 A1 offenbart eine Vorrichtung für die Befestigung eines Spannbandes eines Tanks. Die Vorrichtung weist eine Gewindestange, ein oder mehrere Tellerfedern zwischen einem ersten Befestigungselement und einen Hohlhalter, zumindest zwei Bolzen, ein zweites Befestigungselement und zumindest einen Spannbandstrang, dessen Enden an den Bolzen befestigt sind, auf. Die Bolzen weisen eine Durchführung senkrecht zur Axialrichtung des jeweiligen Bolzens auf. Die genannten Durchführungen haben einen inneren Durchmesser größer als der äußere Durchmesser der Gewindestange, um eine Verschiebung der Bolzen auf der Gewindestange zu ermöglichen.

Die nachveröffentlichte WO 2018/017006 A1 offenbart eine Anordnung zum Fixieren eines oder mehrerer Objekte. Die Anordnung umfasst einen Gurt mit gegenüberliegenden Enden, die mit einem Stützkörper verbunden sind, an dem die Objekte durch Anziehen des Gurtes befestigt werden sollen. Eine Bandspannanordnung umfasst ein Paar von zwei Stiften, die voneinander beabstandet sind und sich quer zu der Längserstreckung des Riemens und parallel zu dem Gurt erstrecken, und ein Bolzen, der eine Verbindung zwischen den Stiften herstellt. Biegekräfte auf den Gurt, die durch abrupte Geschwindigkeitsänderungen des Fahrzeugs ausgeübt werden, führen zu einer Biegung des Gurts in einer Ebene parallel zu den großen flachen Flächen des Gurtes. Dadurch werden die Stifte gekippt, ohne dass eine Biegung des Bolzens erfolgt. Aus der DE 10 2009 042 596 A1 ist bspw. eine Vorrichtung mit einem flachen, insbesondere metallischen Spannband und mit einem mit Enden des Spannbandes zusammenwirkenden Verschlussteil, das ein Spannelement zum Verkürzen des Spannbandes bildet, bekannt. Das Verschlussteil weist zwei kreiszylindrische Umlenkzapfen auf, die jeweils von einem Ende des Spannbandes umschlungen sind. Die Umlenkzapfen werden von einer Spannschraube miteinander verbunden.

Die bekannten Vorrichtungen haben den Nachteil, dass beim Verspannen des Spannbands erhebliche Biegespannungen in einem Verbindungsbauteil, das die gegenüberliegenden Enden des Spannbands verbindet, auftreten können. Diese Biegespannungen können zum Bruch des Verbindungsbauteils führen. Die Biegespannungen können durch einen Winkelversatz der Bolzenbohrungsachsen der mit den Enden des Spannbands verbundenen Spannbolzen hervorgerufen werden. Der Winkelversatz kann zu einer Biegung einer geradlinigen, die Bolzen verbindenden Spannschraube führen.

Der Erfindung liegt somit die Aufgabe zu Grunde, eine Befestigungsvorrichtung für ein Spannband dahingehend zu verbessern, dass die Belastungen oder die Auswirkungen der Belastungen auf das die Spannbolzen verbindende Verbindungsbauteil verringert werden.

Die Aufgabe wird gelöst durch eine Befestigungsvorrichtung für ein Spannband eines Kraftstofftanks oder eines Drucklufttanks zum Befestigen des Kraftstofftanks oder des Drucklufttanks an einem Rahmen eines Kraftfahrzeugs gemäß dem unabhängigen Anspruch. Vorteilhafte Weiterbildungen sind in den abhängigen Ansprüchen angegeben.

Die Befestigungsvorrichtung (Verschlussvorrichtung oder Spannvorrichtung) weist ein Verbindungsbauteil mit einem Schaft auf. Der Schaft erstreckt sich entlang einer Längsachse.

Das Verbindungsbauteil weist zudem eine Kontaktfläche zur Abstützung des Verbindungsbauteils auf. Die Befestigungsvorrichtung weist ferner ein erstes Befestigungselement mit einem Durchgangsloch auf. Das Durchgangsloch erstreckt sich entlang einer Längsachse. Das erste Befestigungselement weist zudem eine Kontaktfläche zur Abstützung der Kontaktfläche des Verbindungsbauteils auf. Der Schaft des Verbindungsbauteils ist mit Spiel zwischen dem Schaft und dem Durchgangsloch in das Durchgangsloch einführbar, sodass ein Winkelversatz zwischen der Längsachse des Schafts und der Längsachse des Durchgangslochs ermöglicht wird. Zusätzlich kann die Kontaktfläche des Verbindungsbauteils in einer Schnittebene, in der sich die Längsachse des Schafts erstreckt, zumindest teilweise kegelig (in Kegelform) oder gerundet (mit einer Rundung) ausgebildet sein.

Die Ermöglichung eines Winkelversatzes zwischen der Längsachse des Schafts und der Längsachse des Durchgangslochs führt zu einer Verringerung der Biegespannung im Schaft beim Verspannen und im montierten Zustand. Insbesondere kann ein Winkelversatz zwischen dem Durchgangsloch und einem weiteren Durchgangsloch eines weiteren Befestigungselements, durch die sich der Schaft erstreckt, bis zu einem gewissen Grad im Durchgangsloch des ersten Befestigungselements ausgeglichen werden, ohne dass der Schaft gebogen wird.

Zusätzlich kann die kegelige oder gerundete Kontaktfläche des Verbindungsbauteils zu einer Vergrößerung des Kontaktbereichs zwischen den Kontaktflächen selbst bei einem Winkelversatz zwischen der Längsachse des Schafts und der Längsachse des Durchgangslochs führen. Dies verringert die Flächenpressung zwischen den Kontaktflächen.

Es versteht sich, dass die Kontaktfläche des Verbindungsbauteils eine definierte Kegelform oder Rundung aufweist. D. h., die definierte Kegelform oder Rundung liegt nicht im mikroskopischen Bereich und ist lediglich ein Nebeneffekt des gewählten Fertigungsverfahren, bei dem beispielsweise (mikroskopische) Radien am Übergang von Flächen entstehen können.

Erfindungsgemäß ist der Schaft mit Spiel zwischen dem Schaft und dem Durchgangsloch in das Durchgangsloch einführbar, sodass ein Winkelversatz zwischen der Längsachse des Schafts und der Längsachse des Durchgangslochs in einer Richtung senkrecht zu einer Längsachse des ersten Befestigungselements ermöglicht wird und insbesondere senkrecht zu der Längsachse des Durchgangslochs.

Die Biegespannung im Schaft kann insbesondere verringert werden, wenn ein Winkelversatz in der Richtung senkrecht zu der Längsachse des ersten Befestigungselements und senkrecht zu der Längsachse des Durchgangslochs ermöglicht wird.

Vorteilhafterweise ist die Kontaktfläche des ersten Befestigungselements zumindest teilweise in einer Schnittebene, in der sich die Längsachse des Durchgangslochs erstreckt, kegelig oder gerundet ausgebildet. D. h., sowohl die Kontaktfläche des Verbindungsbauteils als auch die Kontaktfläche des Befestigungselements können kegelig oder gerundet ausgebildet sein. Dies kann einen Kontaktbereich weiter vergrößern, selbst wenn ein Winkelversatz zwischen dem Schaft und dem Durchgangsloch besteht.

In einer Ausführungsform ist die Kontaktfläche des ersten Befestigungselements insbesondere an einem Endbereich des Durchgangslochs, einem Übergangsbereich zwischen dem Durchgangsloch und einer Außenumfangsfläche des ersten Befestigungselements und/oder an der Außenumfangsfläche des ersten Befestigungselements angeordnet.

In einer Ausführungsvariante ist das Verbindungsbauteil eine Schraube und die Kontaktfläche des Verbindungsbauteils bildet eine Auflagefläche eines Schraubenkopfes. Dies ermöglicht einen einfachen Aufbau des Verbindungsbauteils.

Alternativ kann das Verbindungsbauteil mehrteilig aufgebaut sein. Die Kontaktfläche des Verbindungsbauteils kann eine Auflagefläche einer Schraubenmutter oder eine Auflagefläche eines Zwischenelements, insbesondere einer Hülse, ausbilden. Je nach Anwendung können somit auch Gewindestangen mit Schraubenmuttern und gegebenenfalls einer Hülse zum Ausführen der Erfindung verwendet werden.

In einem Ausführungsbeispiel sind die Kontaktfläche des Verbindungsbauteils und die Kontaktfläche des ersten Befestigungselements so ausgebildet sind, dass ein flächiger Kontakt zwischen der Kontaktfläche des Verbindungsbauteils und der Kontaktfläche des ersten Befestigungselements ermöglicht wird, wenn die Längsachse des Schafts und die Längsachse des Durchgangslochs einen Winkel einschließen. Der flächige Kontakt führt zu einer Verringerung der Flächenpressung. Der flächige Kontakt kann beispielsweise durch eine Verrundung beider Kontaktflächen oder durch eine Kegelform beider Kontaktflächen erreicht werden.

Der flächige Kontakt kann für verschiedene Winkel zwischen der Längsachse des Schafts und der Längsachse des Durchgangslochs bestehen.

Der flächige Kontakt kann auch bestehen, wenn die Längsachse des Schafts und die Längsachse des Durchgangslochs keinen Winkel einschließen, d. h. wenn der Schaft und das Durchgangsloch koaxial zueinander sind.

In einer weiteren Ausführungsform ist die Kontaktfläche des Verbindungsbauteils und/oder die Kontaktfläche des ersten Befestigungselements im Wesentlichen vollständig kegelig oder gerundet ausgebildet. Dies ermöglicht einen flächigen Kontakt zwischen den Kontaktflächen über einen großen Winkelbereich zwischen der Längsachse des Schafts und der Längsachse des Durchgangslochs.

In einer Ausführungsform weist die Kontaktfläche des ersten Befestigungselements eine ovale Ringform auf. Alternativ oder zusätzlich weist die Kontaktfläche des Verbindungsbauteils eine kreisrunde Ringform auf. Es hast sich gezeigt, dass eine derartige Paarung insbesondere in Kombination mit einer Verrundung oder Kegelform der Kontaktflächen besonders geeignet sind zum Verringern von Flächenpressungen in Situationen mit und ohne Winkelversatz.

In einer weiteren Ausführungsvariante weist die Kontaktfläche des Verbindungsbauteils einen Radius auf. Alternativ oder zusätzlich weist die Kontaktfläche des ersten Befestigungselements einen Radius auf. Es hat sich gezeigt, dass insbesondere eine Verrundung der Kontaktflächen besonders geeignet zur Verringerung der Flächenpressungen bei einem Winkelversatz zwischen der Längsachse des Durchgangslochs und der Längsachse des Schafts ist.

Der Radius der Kontaktfläche des Verbindungsbauteils kann einen Wert aufweisen, der größer als ein Durchmesser des Schafts ist.

Der Radius der Kontaktfläche des Verbindungsbauteils und/oder der Radius der Kontaktfläche des Befestigungselements können beispielsweise in einem Bereich zwischen 5 mm und 25 mm, insbesondere im Bereich zwischen 15 mm und 25 mm, liegen.

Vorteilhafterweise ist der Radius der Kontaktfläche des Verbindungsbauteils kleiner als oder gleich dem Radius der Kontaktfläche des ersten Befestigungselements.

Vorzugsweise ist der Radius der Kontaktfläche des Verbindungsbauteils konkav und der Radius der Kontaktfläche des ersten Befestigungselements konvex. Alternativ kann der Radius der Kontaktfläche des Verbindungsbauteils konvex und der Radius der Kontaktfläche des ersten Befestigungselements konkav sein. Durch eine konvex-konkav-Paarung der Kontaktflächen kann auf besonders bevorzugte Weise ein Aneinandergleiten der Kontaktflächen unter Einhaltung eines flächigen Kontakts gewährleistet werden. Somit können die Kontaktflächen aneinander gleiten, wenn sich beim Verspannen ein Winkelversatz zwischen dem Schaft und dem Durchgangsloch allmählich verändert.

In einem weiteren Ausführungsbeispiel weist die Befestigungsvorrichtung ferner ein Spannband mit einer ersten Spannlasche auf. In der ersten Spannlasche ist das erste Befestigungselement einsetzbar oder integriert. Das erste Befestigungselement ist beispielsweise als Bolzen in die Spannlasche einsetzbar.

In einer weiteren Ausführungsvariante weist die Befestigungsvorrichtung ferner ein zweites Befestigungselement mit einem Durchgangsloch auf. Das Durchgangsloch kann insbesondere ein Gewindeloch sein. Der Schaft des Verbindungsbauteils ist in das Durchgangsloch einführbar, insbesondere einschraubbar. Durch Einschrauben des Schafts in das Durchgangsloch des zweiten Befestigungselements oder durch Aufschrauben einer Mutter auf den Schaft, die in Anlage mit dem zweiten Befestigungselement kommt, kann die Befestigungsvorrichtung verspannt werden.

In einer weiteren Ausführungsform weist das Spannband ferner eine zweite Spannlasche auf, in die das zweite Befestigungselement einsetzbar oder integriert ist. Die erste Spannlasche ist insbesondere an einem ersten Ende des Spannbands und die zweite Spannlasche insbesondere an einem zweiten Ende des Spannbands, das dem ersten Ende gegenüberliegt, angeordnet.

Vorzugsweise ist das erste Befestigungselement als ein Bolzen zum Einsetzen in eine Spannlasche eines Spannbands ausgebildet. Alternativ oder zusätzlich ist das zweite Befestigungselement als ein Bolzen zum Einsetzen in eine Spannlasche eines Spannbands ausgebildet.

In einem weiteren Ausführungsbeispiel wirken die in der Schnittebene zumindest teilweise kegelige oder gerundete Kontaktfläche des Verbindungsbauteils (und insbesondere die in der Schnittebene zumindest teilweise kegelige oder gerundete Kontaktfläche des ersten Befestigungselements) und das Spiel zwischen dem Schaft und dem Durchgangsloch wie folgt zusammen. Eine Veränderung eines Winkels zwischen der Längsachse des Schafts und der Längsachse des Durchgangslochs wird bei einer gleichzeitigen Relativbewegung zwischen den Kontaktflächen unter Beibehaltung eines Kontakts zwischen den Kontaktflächen insbesondere während eines Verspannens der Befestigungsvorrichtung ermöglicht. Ein Winkelversatz der Längsachsen der Durchgangslöcher der Befestigungselemente wird zumindest teilweise ausgeglichen, um insbesondere eine Biegespannung in dem Verbindungsbauteil zu verringern.

Die Erfindung betrifft ferner ein Kraftfahrzeug, insbesondere ein Nutzfahrzeug, mit einer Befestigungsvorrichtung wie hierin offenbart.

In einer Ausführungsvariante befestigt die Befestigungsvorrichtung einen Behälter, insbesondere einen Kraftstofftank oder einen Drucklufttank, an einem Rahmen des Kraftfahrzeugs.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine beispielhafte Befestigungsvorrichtung für ein Spannband eines Behälters eines Kraftfahrzeugs;
- Figur 2: die beispielhafte Befestigungsvorrichtung;
- Figur 3: eine weitere Ansicht der beispielhaften Befestigungsvorrichtung;
- Figur 4: einen Schnitt durch die beispielhafte Befestigungsvorrichtung entlang der Linie A-A in Figur 3; und
- Figur 5: ein Detail der beispielhaften Befestigungsvorrichtung gemäß dem in Figur 4 mit dem Buchstaben B gekennzeichneten Bereich.

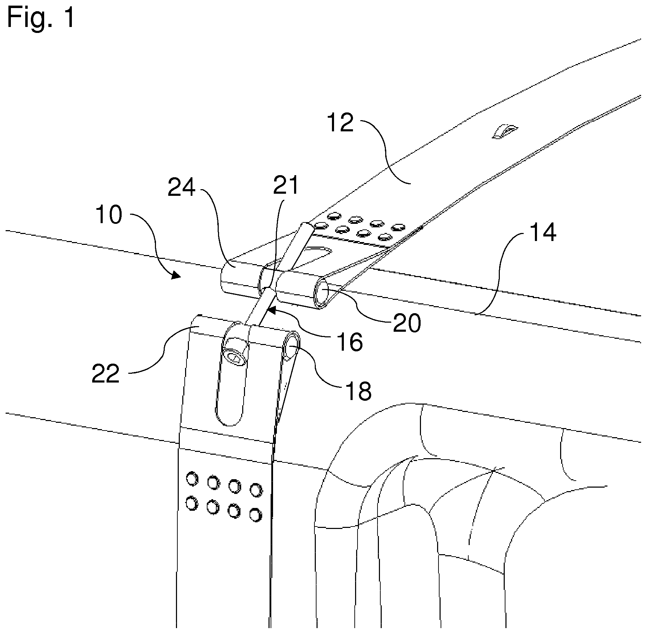

Die Figur 1 zeigt eine beispielhafte Befestigungsvorrichtung 10. Die Befestigungsvorrichtung 10 dient zum Spannen und Befestigen eines Spannbands 12. Das Spannband 12 hält einen Behälter 14, zum Beispiel einen Kraftstofftank oder einen Druckluftbehälter, eines Kraftfahrzeugs an einem Rahmen des Kraftfahrzeugs.

Die Befestigungsvorrichtung 10 weist ein Verbindungsbauteil 16 auf. Das Verbindungsbauteil 16 kann als eine Schraube ausgebildet sein, wie in den Figuren 1 bis 5 dargestellt ist. Alternativ kann das Verbindungsbauteil 16 beispielsweise eine Gewindestange und eine oder mehrere auf die Gewindestange geschraubte Schraubenmuttern aufweisen. Eine auf die Gewindestange aufgeschraubte Schraubenmutter kann eine Kontaktfläche zum Abstützen des Verbindungsbauteils 16 aufweisen.

Das Verbindungsbauteil 16 verbindet ein erstes Befestigungselement 18 und ein zweites Befestigungselement 20. Im Einzelnen erstreckt sich das Verbindungsbauteil 16 durch ein Durchgangsloch eines ersten Befestigungselements 18 und ein Durchgangsloch 21 eines zweiten Befestigungselements 20.

Das erste und zweite Befestigungselement 18 und 20 sind als Bolzen ausgebildet. Das erste Befestigungselement 18 ist in einer ersten Spannlasche 22 des Spannbands 12 eingesetzt. Das zweite Befestigungselement 20 ist in einer zweiten Spannlasche 24 des Spannbands 12 eingesetzt. Die erste und zweite Spannlasche 22 und 24 sind an gegenüberliegenden Enden des Spannbands 12 angeordnet. Alternativ könnte das erste Befestigungselement 18 und/oder das zweite Befestigungselement 20 direkt in die jeweilige Spannlasche 20, 22 integriert sein.

In der dargestellten Ausführungsform kann das Verbindungsbauteil 16 das Spannband 12 spannen. Das Verbindungsbauteil 16 liegt an dem ersten Befestigungselement 18 an. Das Verbindungsbauteil 16 kann in das als Gewindeloch ausgebildete Durchgangsloch 21 des zweiten Befestigungselements 20 eingeschraubt werden. Das Einschrauben verkürzt einen Abstand zwischen dem ersten und zweiten Befestigungselement 18 und 20. Das Spannband 12 wird gespannt.

In anderen Ausführungsformen kann das Verbindungsbauteil beispielsweise einen Gewindeabschnitt aufweisen, der aus dem Durchgangsloch des zweiten Befestigungselements herausragt. Der Gewindeabschnitt ragt in einer Richtung entgegengesetzt zu dem ersten Befestigungselement aus dem Durchgangsloch. Auf den Gewindeabschnitt kann eine Schraubenmutter aufgeschraubt werden. Die Schraubenmutter wird zur Anlage an dem zweiten Befestigungselement gebracht. Ein Festziehen der Schraubenmutter führt zu einem Spannen des Spannbands 12.

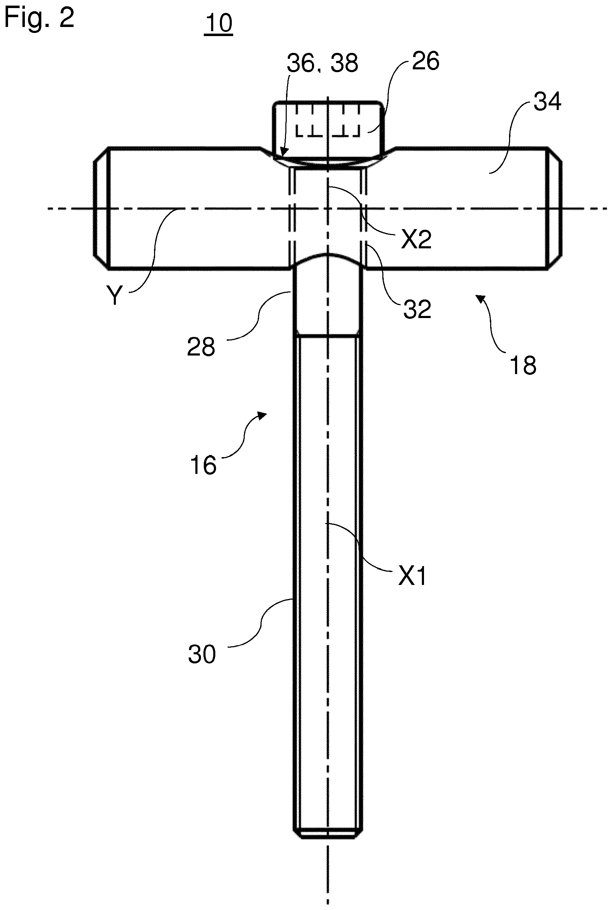

Unter Bezugnahme auf die Figuren 2 bis 5 wird nachfolgend eine beispielhafte Ausführungsform der Befestigungsvorrichtung 10 beschrieben.

Das als Schraube ausgebildete Verbindungsbauteil 16 weist einen Schraubenkopf 26 und einen Schaft 28 auf. Der Schraubenkopf 26 kann beispielsweise einen Innensechskant aufweisen. Der Schaft 28 weist einen Gewindeabschnitt 30 auf. Der Gewindeabschnitt 30 ist dazu ausgebildet, in das Gewindeloch 21 des zweiten Befestigungselements 20 eingeschraubt zu werden (siehe Figur 1). Der Schaft 28 erstreckt sich entlang einer Längsachse X1. Der Gewindeabschnitt 30 und der Schraubenkopf 26 sind an gegenüberliegenden Enden des Verbindungsbauteils 16 angeordnet.

Das als Bolzen ausgebildete erste Befestigungselement 18 erstreckt sich entlang einer Längsachse Y. Das erste Befestigungselement 18 weist ein Durchgangsloch 32 auf. Eine Längsachse X2 des Durchgangslochs 32 erstreckt sich senkrecht zur Längsachse Y des ersten Befestigungselements 18. Das erste Befestigungselement 18 weist ferner eine zylindrische Außenumfangsfläche 34 auf. Die Außenumfangsfläche 34 stützt das erste Befestigungselement 18 an der Spannlasche 22 des Spannbands 12 ab (siehe Figur 1).

Der Schaft 28 erstreckt sich durch das Durchgangsloch 32. Zwischen einer Außenumfangsfläche des Schafts 28 und einer Innenumfangsfläche des Durchgangslochs 32 ist ein Abstand vorgesehen. Der Schaft 28 kann mit Spiel in das Durchgangsloch 32 eingeführt werden. So wird insbesondere ermöglicht, dass die Längsachse X1 des Schafts 28 und die Längsachse X2 des Durchgangslochs 32 einen Winkel einschließen.

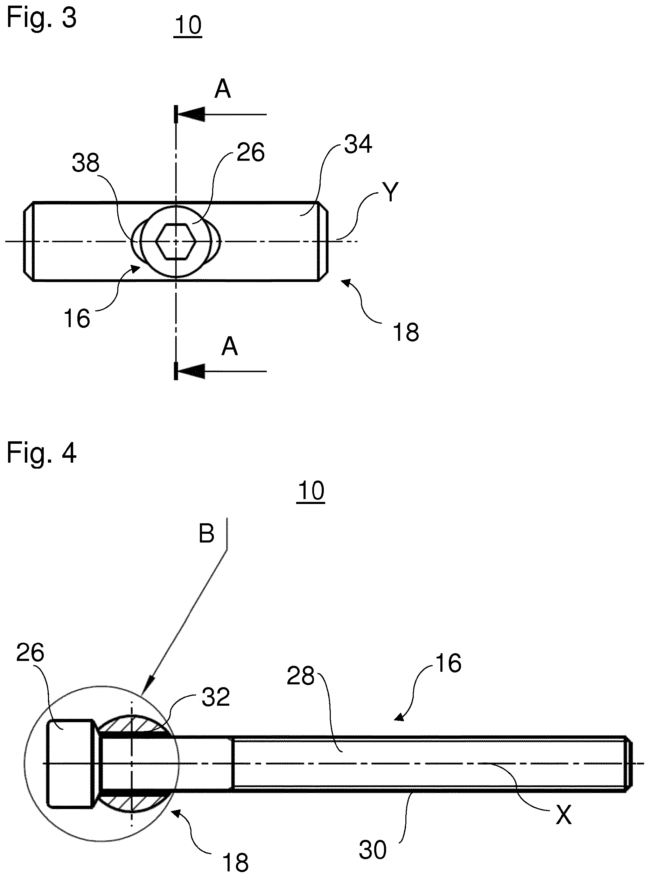

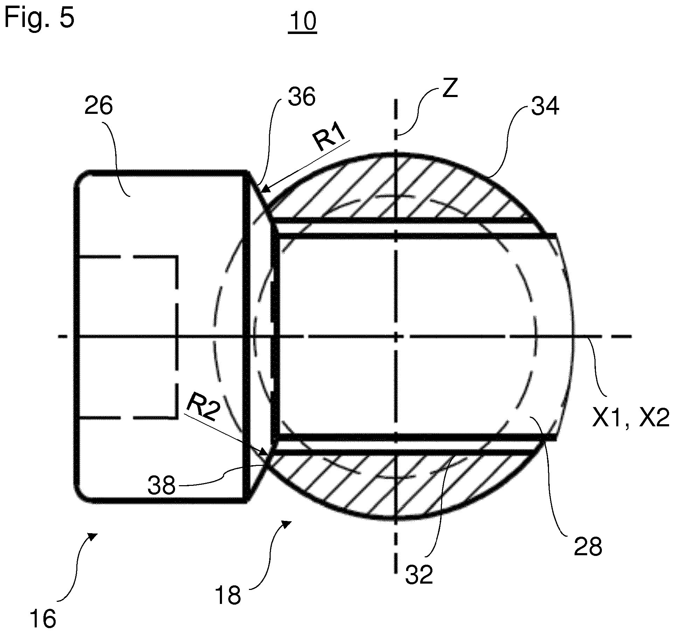

Unter Bezugnahme auf Figur 5 ist insbesondere die Ausbildung des Schraubenkopfes 26 und des Durchgangslochs 32 im Detail dargestellt. Die Figur 5 zeigt das Detail B aus Figur 4.

In der Figur 5 ist nochmals besonders deutlich aufgezeigt, dass eine Außenumfangsfläche des Schafts 28 von einer Innenumfangsfläche des Durchgangslochs 32 beabstandet ist. Dies ermöglicht insbesondere einen Winkelversatz zwischen der Längsachse X1 des Schafts 28 und einer Längsachse X2 des Durchgangslochs 32. In Figur 5 schließen die Längsachsen X1 und X2 keinen Winkel ein. Der Winkelversatz kann insbesondere in einer Richtung senkrecht zur Längsachse Y ermöglicht werden. Mit anderen Worten gesagt, kann der Winkelversatz insbesondere in einer Richtung einer Breitenachse Z des ersten Befestigungselements 18 ermöglicht werden. Die Breitenachse Z erstreckt sich senkrecht zur Längsachse Y des ersten Befestigungselements 18.

Das Ermöglichen dieses Winkelversatzes zwischen dem Schaft 28 und dem Durchgangsloch 32 ermöglicht eine Reduzierung der Biegespannung des Schafts 28 beim Verspannen und im montierten Zustand. In der Praxis kann es häufig vorkommen, dass die auftretenden Zugkräfte beim Verspannen die Gelenkfunktion des ersten und zweiten Befestigungselements 18 und 20 überlagern. Somit können sich die eigentlich drehbar vorgesehenen Befestigungselemente 18 und 20 nicht ausgleichend drehen. Es kann zu einem Winkelversatz der Längsachsen der Durchgangslöcher (Bolzenbohrungsachsen) der Befestigungselemente 18 und 20 kommen. Würde kein Spiel zwischen dem Schaft 28 und dem Durchgangsloch 32 vorgesehen sein, so würde sich eine schädigende Biegespannung im Schaft 28 des Verbindungsbauteils 16 ausbilden. Die Biegespannung könnte zu einem Bruch des Schafts 28 führen. Da jedoch ein Spiel zwischen der Außenumfangsfläche des Schafts 28 und der Innenumfangsfläche des Durchgangslochs 32 vorgesehen ist, kann ein Winkelversatz bis zu einem gewissen Grad ausgeglichen werden, ohne dass der Schaft 28 gebogen wird. Folglich kann eine Biegespannung im Schaft 28 beim Verspannen und im montierten Zustand verhindert oder zumindest verringert werden.

Der Schraubenkopf 26 weist eine Kontaktfläche 36 auf. Die Kontaktfläche 36 ist eine Auflagefläche des Schraubenkopfes 26. Die Kontaktfläche 36 dient zur Abstützung des Schraubenkopfes 26 (des Verbindungsbauteils 16) an dem ersten Befestigungselement 18. In anderen Ausführungsformen kann die Kontaktfläche 36 beispielsweise eine Auflagefläche einer Schraubenmutter sein, die alternativ zu dem Schraubenkopf 26 vorgesehen ist. Es ist auch denkbar, dass die Kontaktfläche 36 eine Auflagefläche eines Zwischenelements ist, zum Beispiel einer Hülse. Die Hülse kann beispielsweise auf einem Schaft des Verbindungsbauteils zwischen einem Schraubenkopf und dem ersten Befestigungselement 32 positioniert sein.

Das erste Befestigungselement 18 weist eine Kontaktfläche 38 auf. Die Kontaktfläche 38 dient zur Abstützung der Kontaktfläche 36 des Schraubenkopfes 26. In der dargestellten Ausführungsform ist die Kontaktfläche 38 in einem Endabschnitt des Durchgangslochs 26 angeordnet. Alternativ oder zusätzlich kann die Kontaktfläche 38 einen Abschnitt der Außenumfangsfläche 34 ausbilden.

Die Kontaktfläche 36 ist in einer Schnittebene, in der sich die Längsachse X1 erstreckt, gerundet ausgebildet. Die Kontaktfläche 38 ist in einer Schnittebene, in der sich die Längsachse X2 erstreckt, gerundet ausgebildet. Die Verrundungen der Kontaktfläche 36 und 38 ermöglichen einen flächigen Kontakt der Kontaktflächen 36 und 38 auch wenn die Längsachse X1 des Schafts 28 und die Längsachse X2 des Durchgangslochs 32 einen Winkel einschlie-ßen. Dies kann die (Flächen-) Pressung zwischen den Kontaktflächen 36 und 38 verringern. Zusätzlich ermöglichen die Verrundungen, dass eine Veränderung eines Winkels zwischen den Längsachsen X1, X2 bei einer gleichzeitigen Relativbewegung zwischen den Kontaktflächen 36, 38 unter Beibehaltung eines Kontakts zwischen den Kontaktflächen 36, 38 während eines Verspannens der Befestigungsvorrichtung 10 ermöglicht wird.

Im Einzelnen weist die Kontaktfläche 36 des Schraubenkopfes 26 einen Radius R1 auf. Der Radius R1 liegt in einer Ebene, in der sich die Längsachse X1 erstreckt. Die Kontaktfläche 38 des Befestigungselements 18 weist einen Radius R2 auf. Der Radius R2 liegt in einer Ebene, in der sich die Längsachse X2 des Durchgangslochs 32 erstreckt. Der Radius R1 ist konvex ausgebildet und der Radius R2 ist konkav ausgebildet. Die Radien R1 und R2 können ungefähr gleich groß sein. Beispielsweise ist es allerdings auch möglich, dass der Radius R1 kleiner als der Radius R2 ist. Ebenso ist es beispielsweise möglich, dass der Radius R1 konkav und der Radius R2 konvex ist.

Der Radius R1 kann einen Wert aufweisen, der größer als ein Durchmesser des Schafts 28 ist. Der Radius R1 und/oder der Radius R2 können beispielsweise in einem Bereich zwischen 5 mm und 25 mm, insbesondere im Bereich zwischen 15 mm und 25 mm, liegen.

In einigen Ausführungsformen können die Kontaktfläche 36 und die Kontaktfläche 38 zumindest teilweise kegelig ausgebildet sein. Auch hierdurch kann ein flächiger Kontakt zwischen den Kontaktflächen 36 und 38 bei einem Winkelversatz zwischen dem Schaft 28 und dem Durchgangsloch 32 ermöglicht werden.

In einigen Ausführungsformen kann lediglich die Kontaktfläche 36 des Schraubenkopfes 26 zumindest teilweise gerundet oder kegelig ausgebildet sein. Dies kann die Flächenpressung zwischen den Kontaktflächen 36 und 38 bei einem Winkelversatz verringern, wenn auch nicht so stark wie bei Ausführungsformen, in denen beide Kontaktflächen 36 und 38 verrundet oder kegelig ausgebildet sind.

Wie insbesondere der Figur 3 entnommen werden kann, kann die Kontaktfläche 38 des ersten Befestigungselements 18 eine ovale Ringform aufweisen. Die Kontaktfläche 36 des Verbindungsbauteils 16 kann eine kreisrunde Ringform aufweisen 8 (siehe Figur 5).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen solange sie in den Schutzbereich fallen, wie er durch die Ansprüche definiert wird.

### Bezugszeichen

- 10: Befestigungsvorrichtung
- 12: Spannband
- 14: Behälter
- 16: Verbindungsbauteil
- 18: Erstes Befestigungselement
- 20: Zweites Befestigungselement
- 21: Durchgangsloch
- 22: Erste Spannlasche
- 24: Zweite Spannlasche
- 26: Schraubenkopf
- 28: Schaft
- 30: Gewindeabschnitt
- 32: Durchgangsloch
- 34: Außenumfangsfläche
- 36: Kontaktfläche des Verbindungsbauteils
- 38: Kontaktfläche des ersten Befestigungselements
- X1: Längsachse des Schafts
- X2: Längsachse des Durchgangslochs
- Y: Längsachse des ersten Befestigungselements
- B: Breitenachse des ersten Befestigungselements

## Patentansprüche

1. Befestigungsvorrichtung (10) für ein Spannband (12) eines Kraftstofftanks oder eines Drucklufttanks (14) zum Befestigen des Kraftstofftanks oder des Drucklufttanks (14) an einem Rahmen eines Kraftfahrzeugs, aufweisend:
ein Verbindungsbauteil (16) mit einem Schaft (28), der sich entlang einer Längsachse (X1) erstreckt, und einer Kontaktfläche (36) zur Abstützung des Verbindungsbauteils (16); und
ein erstes Befestigungselement (18) mit einem Durchgangsloch (32), das sich entlang einer Längsachse (X2) erstreckt, und einer Kontaktfläche (38) zur Abstützung der Kontaktfläche (36) des Verbindungsbauteils (16), wobei das erste Befestigungselement (18) in eine erste Spannlasche des Spannbands (12) einsetzbar oder integrierbar ist;
wobei der Schaft (28) des Verbindungsbauteils (16) mit Spiel zwischen dem Schaft (28) und dem Durchgangsloch (32) in das Durchgangsloch (32) einführbar ist, sodass ein Winkelversatz zwischen der Längsachse (X1) des Schafts (28) und der Längsachse (X2) des Durchgangslochs (32) in einer Richtung senkrecht zu einer Längsachse (Y) des ersten Befestigungselements (18), und senkrecht zu der Längsachse (X2) des Durchgangslochs (32), ermöglicht wird.

2. Befestigungsvorrichtung (10) nach Anspruch 1, wobei:
die Kontaktfläche (36) des Verbindungsbauteils (16) in einer Schnittebene, in der sich die Längsachse (X1) des Schafts (28) erstreckt, zumindest teilweise kegelig oder gerundet ausgebildet ist.

3. Befestigungsvorrichtung (10) nach Anspruch 1 oder Anspruch 2, wobei die Kontaktfläche (38) des ersten Befestigungselements (18) in einer Schnittebene, in der sich die Längsachse (X2) des Durchgangslochs (32) erstreckt, zumindest teilweise kegelig oder gerundet ausgebildet ist, wobei die Kontaktfläche (38) des ersten Befestigungselements (18) insbesondere:
an einem Endbereich des Durchgangslochs (32); und/oder
in einem Übergangsbereich zwischen dem Durchgangsloch (32) und einer Außenumfangsfläche (34) des ersten Befestigungselements (18); und/oder
an einer Außenumfangsfläche (34) des ersten Befestigungselements (18) angeordnet ist.

4. Befestigungsvorrichtung (10) nach einem der vorherigen Ansprüche, wobei:
das Verbindungsbauteil (16) eine Schraube ist und die Kontaktfläche (36) des Verbindungsbauteils (16) eine Auflagefläche eines Schraubenkopfes (26) ausbildet; oder
das Verbindungsbauteil (16) mehrteilig aufgebaut ist und die Kontaktfläche (36) des Verbindungsbauteils (16) eine Auflagefläche einer Schraubenmutter oder eine Auflagefläche eines Zwischenelements, insbesondere einer Hülse, ausbildet.

5. Befestigungsvorrichtung (10) nach einem der vorherigen Ansprüche, wobei die Kontaktfläche (36) des Verbindungsbauteils (16) und die Kontaktfläche (38) des ersten Befestigungselements (18) so ausgebildet sind, dass ein flächiger Kontakt zwischen der Kontaktfläche (36) des Verbindungsbauteils (16) und der Kontaktfläche (38) des ersten Befestigungselements (18) ermöglicht wird, wenn die Längsachse (X1) des Schafts (28) und die Längsachse (X2) des Durchgangslochs (32) einen Winkel einschließen.

6. Befestigungsvorrichtung (10) nach einem der vorherigen Ansprüche, wobei die Kontaktfläche (36) des Verbindungsbauteils (16) und/oder die Kontaktfläche (38) des ersten Befestigungselements (18) im Wesentlichen vollständig kegelig oder gerundet ausgebildet ist.

7. Befestigungsvorrichtung (10) nach einem der vorherigen Ansprüche, wobei:
die Kontaktfläche (38) des ersten Befestigungselements (18) eine ovale Ringform aufweist; und/oder
die Kontaktfläche (36) des Verbindungsbauteils (16) eine kreisrunde Ringform aufweist.

8. Befestigungsvorrichtung (10) nach einem der vorherigen Ansprüche, wobei:
die Kontaktfläche (36) des Verbindungsbauteils (16) einen Radius (R1) aufweist; und/oder
die Kontaktfläche (38) des ersten Befestigungselements (18) einen Radius (R2) aufweist.

9. Befestigungsvorrichtung (10) nach Anspruch 8, wobei der Radius (R1) der Kontaktfläche (36) des Verbindungsbauteils (16) kleiner als oder gleich dem Radius (R2) der Kontaktfläche (38) des ersten Befestigungselements (18) ist.

10. Befestigungsvorrichtung (10) nach Anspruch 8 oder Anspruch 9, wobei:
der Radius (R1) der Kontaktfläche (36) des Verbindungsbauteils (16) konkav ist und der Radius (R2) der Kontaktfläche (38) des ersten Befestigungselements (18) konvex ist; oder
der Radius (R1) der Kontaktfläche (36) des Verbindungsbauteils (16) konvex ist und der Radius (R2) der Kontaktfläche (38) des ersten Befestigungselements (18) konkav ist.

11. Befestigungsvorrichtung (10) nach einem der vorherigen Ansprüche, ferner aufweisend:
ein Spannband (12) mit einer ersten Spannlasche (22), in das das erste Befestigungselement (18) einsetzbar oder integriert ist; und/oder
ein zweites Befestigungselement (20) mit einem Durchgangsloch (21), insbesondere einem Gewindeloch, in das der Schaft (28) des Verbindungsbauteils (16) einführbar, insbesondere einschraubbar, ist.

12. Befestigungsvorrichtung (10) nach Anspruch 11, wobei das Spannband (12) ferner eine zweite Spannlasche (24) aufweist, in die das zweite Befestigungselement (20) einsetzbar oder integriert ist, wobei die erste Spannlasche (22) insbesondere an einem ersten Ende des Spannbands (12) und die zweite Spannlasche (24) insbesondere an einem zweiten Ende des Spannbands (12), das dem ersten Ende gegenüberliegt, angeordnet ist.

13. Befestigungsvorrichtung (10) nach einem der vorherigen Ansprüche, wobei:
das erste Befestigungselement (18) als ein Bolzen zum Einsetzen in eine Spannlasche (22) eines Spannbands (12) ausgebildet ist; und/oder
das zweite Befestigungselement (20) als ein Bolzen zum Einsetzen in eine Spannlasche (24) eines Spannbands (12) ausgebildet ist.

14. Befestigungsvorrichtung (10) nach einem der vorherigen Ansprüche, wobei die in der Schnittebene zumindest teilweise kegelige oder gerundete Kontaktfläche (36) des Verbindungsbauteils (16) und das Spiel zwischen dem Schaft (28) und dem Durchgangsloch (32) so zusammenwirken, dass:
eine Veränderung eines Winkels zwischen der Längsachse (X1) des Schafts (28) und der Längsachse (X2) des Durchgangslochs (32) bei einer gleichzeitigen Relativbewegung zwischen den Kontaktflächen (36, 38) unter Beibehaltung eines Kontakts zwischen den Kontaktflächen (36, 38) insbesondere während eines Verspannens der Befestigungsvorrichtung (10) ermöglicht wird; und/oder
ein Winkelversatz der Längsachsen der Durchgangslöcher (21, 36) der Befestigungselemente (18, 20) zumindest teilweise ausgeglichen wird.

15. Kraftfahrzeug, insbesondere Nutzfahrzeug, mit einer Befestigungsvorrichtung (10) nach einem der vorherigen Ansprüche, wobei die Befestigungsvorrichtung (10) einen Behälter (14), insbesondere einen Kraftstofftank oder einen Drucklufttank, an einem Rahmen des Kraftfahrzeugs befestigt.

## Claims

1. Fastening device (10) for a tensioning strap (12) of a fuel tank or a compressed air tank (14) for fastening the fuel tank or the compressed air tank (14) to a frame of a motor vehicle, comprising:
a connecting component (16) with a shank (28) extending along a longitudinal axis (X1) and a contact face (36) for supporting the connecting component (16); and
a first fastening element (18) having a through hole (32) extending along a longitudinal axis (X2) and a contact face (38) for supporting the contact face (36) of the connecting component (16), the first fastening element (18) being insertable or integratable into a first tensioning lug of the tensioning strap (12);
wherein the shank (28) of the connecting component (16) is insertable into the through hole (32) with clearance between the shank (28) and the through hole (32), such that an angular offset between the longitudinal axis (X1) of the shank (28) and the longitudinal axis (X2) of the through hole (32) is allowed in a direction perpendicular to a longitudinal axis (Y) of the first fastening element (18), and perpendicular to the longitudinal axis (X2) of the through hole (32).

2. Fastening device (10) according to claim 1, wherein:
the contact face (36) of the connecting component (16) is configured at least partially tapered or rounded in a sectional plane in which the longitudinal axis (X1) of the shank (28) extends.

3. Fastening device (10) according to claim 1 or claim 2, wherein the contact face (38) of the first fastening element (18) is configured at least partially tapered or rounded in a sectional plane in which the longitudinal axis (X2) of the through hole (32) extends, wherein the contact face (38) of the first fastening element (18) is arranged in particular:
at an end portion of the through hole (32); and/or
in a transition portion between the through hole (32) and an outer circumferential face (34) of the first fastening element (18); and/or
on an outer circumferential face (34) of the first fastening member (18).

4. Fastening device (10) according to any one of the preceding claims, wherein:
the connecting component (16) is a screw and the contact face (36) of the connecting component (16) forms a bearing face of a screw head (26); or
the connecting component (16) is constructed in several parts and the contact face (36) of the connecting component (16) forms a bearing face of a screw nut or a bearing face of an intermediate element, in particular a sleeve.

5. Fastening device (10) according to any of the previous claims, wherein the contact face (36) of the connecting component (16) and the contact face (38) of the first fastening element (18) are configured in such a way that a planar contact between the contact face (36) of the connecting component (16) and the contact face (38) of the first fastening element (18) is made possible when the longitudinal axis (X1) of the shank (28) and the longitudinal axis (X2) of the through hole (32) enclose an angle.

6. Fastening device (10) according to any of the previous claims, wherein the contact face (36) of the connecting component (16) and/or the contact face (38) of the first fastening element (18) is configured to be substantially fully tapered or rounded.

7. Fastening device (10) according to any one of the previous claims, wherein:
the contact face (38) of the first fastening element (18) has an oval ring shape; and/or
the contact face (36) of the connecting component (16) has a circular ring shape.

8. Fastening device (10) according to any one of the previous claims, wherein:
the contact face (36) of the connecting component (16) has a radius (R1); and/or
the contact face (38) of the first fastening member (18) has a radius (R2).

9. Fastening device (10) according to claim 8, wherein the radius (R1) of the contact face (36) of the connecting component (16) is smaller than or equal to the radius (R2) of the contact face (38) of the first fastening component (18).

10. Fastening device (10) according to claim 8 or claim 9, wherein:
the radius (R1) of the contact face (36) of the connecting component (16) is concave and the radius (R2) of the contact face (38) of the first fastening element (18) is convex; or
the radius (R1) of the contact face (36) of the connecting component (16) is convex and the radius (R2) of the contact face (38) of the first fastening element (18) is concave

11. Fastening device (10) according to any one of the previous claims, further comprising:
a tensioning strap (12) having a first tensioning lug (22) into which the first fastening element (18) is insertable or integrated; and/or
a second fastening element (20) with a through hole (21), in particular a threaded hole, into which the shank (28) of the connecting component (16) can be inserted, in particular screwed in.

12. Fastening device (10) according to claim 11, wherein the tensioning strap (12) further comprises a second tensioning lug (24) into which the second fastening element (20) is insertable or integrated, wherein the first tensioning lug (22) is arranged in particular at a first end of the tensioning strap (12) and the second tensioning lug (24) is arranged in particular at a second end of the tensioning strap (12) opposite the first end.

13. Fastening device (10) according to any one of the previous claims, wherein:
the first fastening element (18) is configured as a bolt for insertion into a tensioning lug (22) of a tensioning strap (12); and/or
the second fastening element (20) is configured as a bolt for insertion into a tensioning lug (24) of a tensioning strap (12).

14. Fastening device (10) according to any of the previous claims, wherein the contact face (36) of the connecting component (16), which is at least partially tapered or rounded in the sectional plane, and the clearance between the shank (28) and the through hole (32) cooperate in such a way that:
a variation of an angle between the longitudinal axis (X1) of the shank (28) and the longitudinal axis (X2) of the through hole (32) is enabled with a simultaneous relative movement between the contact faces (36, 38) while maintaining a contact between the contact faces (36, 38) in particular during a bracing of the fastening device (10); and/or
an angular offset of the longitudinal axes of the through holes (21, 36) of the fastening elements (18, 20) is at least partially compensated.

15. Motor vehicle, in particular utility vehicle, with a fastening device (10) according to any of the previous claims, wherein the fastening device (10) fastens a container (14), in particular a fuel tank or a compressed air tank, to a frame of the motor vehicle.

## Revendications

1. Dispositif de fixation (10) pour une bande de serrage (12) d'un réservoir de carburant ou d'un réservoir d'air comprimé (14) servant à la fixation du réservoir de carburant ou du réservoir d'air comprimé (14) à un cadre d'un véhicule automobile, présentant :
un composant de liaison (16) doté d'une tige (28) qui s'étend le long d'un axe longitudinal (X1), et d'une surface de contact (36) servant au support du composant de liaison (16) ; et
un premier élément de fixation (18) doté d'un trou traversant (32) qui s'étend le long d'un axe longitudinal (X2), et d'une surface de contact (38) servant au support de la surface de contact (36) du composant de liaison (16), le premier élément de fixation (18) pouvant être inséré ou pouvant être intégré dans une première patte de serrage de la bande de serrage (12) ;
la tige (28) du composant de liaison (16) pouvant être insérée dans le trou traversant (32) avec jeu entre la tige (28) et le trou traversant (32), de telle sorte qu'un décalage angulaire entre l'axe longitudinal (X1) de la tige (28) et l'axe longitudinal (X2) du trou traversant (32) dans une direction perpendiculaire à un axe longitudinal (Y) du premier élément de fixation (18), et perpendiculaire à l'axe longitudinal (X2) du trou traversant (32) soit rendu possible.

2. Dispositif de fixation (10) selon la revendication 1, dans lequel :
la surface de contact (36) du composant de liaison (16) est formée de manière au moins partiellement conique ou arrondie dans un plan de coupe dans lequel s'étend l'axe longitudinal (X1) de la tige (28).

3. Dispositif de fixation (10) selon la revendication 1 ou la revendication 2, dans lequel la surface de contact (38) du premier élément de fixation (18) est formée de manière au moins partiellement conique ou arrondie dans un plan de coupe dans lequel s'étend l'axe longitudinal (X2) du trou traversant (32), dans lequel la surface de contact (38) du premier élément de fixation (18) est disposée en particulier :
au niveau d'une région d'extrémité du trou traversant (32) ; et/ou
dans une région de transition entre le trou traversant (32) et une surface périphérique extérieure (34) du premier élément de fixation (18) ; et/ou
au niveau d'une surface périphérique extérieure (34) du premier élément de fixation (18).

4. Dispositif de fixation (10) selon l'une des revendications précédentes, dans lequel :
le composant de liaison (16) est une vis et la surface de contact (36) du composant de liaison (16) forme une surface d'appui d'une tête de vis (26) ; ou
le composant de liaison (16) est constitué de plusieurs parties et la surface de contact (36) du composant de liaison (16) forme une surface d'appui d'un écrou ou une surface d'appui d'un élément intermédiaire, en particulier d'une douille.

5. Dispositif de fixation (10) selon l'une des revendications précédentes, dans lequel la surface de contact (36) du composant de liaison (16) et la surface de contact (38) du premier élément de fixation (18) sont formées de telle sorte qu'un contact plat entre la surface de contact (36) du composant de liaison (16) et la surface de contact (38) du premier élément de fixation (18) soit rendu possible lorsque l'axe longitudinal (X1) de la tige (28) et l'axe longitudinal (X2) du trou traversant (32) forment un angle.

6. Dispositif de fixation (10) selon l'une des revendications précédentes, dans lequel la surface de contact (36) du composant de liaison (16) et/ou la surface de contact (38) du premier élément de fixation (18) sont formées sensiblement complètement de manière conique ou arrondie.

7. Dispositif de fixation (10) selon l'une des revendications précédentes, dans lequel :
la surface de contact (38) du premier élément de fixation (18) présente une forme annulaire ovale ; et/ou
la surface de contact (36) du composant de liaison (16) présente une forme annulaire circulaire.

8. Dispositif de fixation (10) selon l'une des revendications précédentes, dans lequel :
la surface de contact (36) du composant de liaison (16) présente un rayon (R1) ; et/ou
la surface de contact (38) du premier élément de fixation (18) présente un rayon (R2).

9. Dispositif de fixation (10) selon la revendication 8, dans lequel le rayon (R1) de la surface de contact (36) du composant de liaison (16) est inférieur ou égal au rayon (R2) de la surface de contact (38) du premier élément de fixation (18).

10. Dispositif de fixation (10) selon la revendication 8 ou la revendication 9, dans lequel :
le rayon (R1) de la surface de contact (36) du composant de liaison (16) est concave et le rayon (R2) de la surface de contact (38) du premier élément de fixation (18) est convexe ; ou
le rayon (R1) de la surface de contact (36) du composant de liaison (16) est convexe et le rayon (R2) de la surface de contact (38) du premier élément de fixation (18) est concave.

11. Dispositif de fixation (10) selon l'une des revendications précédentes, présentant en outre :
une bande de serrage (12) dotée d'une première patte de serrage (22) dans laquelle le premier élément de fixation (18) peut être inséré ou est intégré ; et/ou
un deuxième élément de fixation (20) doté d'un trou traversant (21), en particulier d'un trou taraudé, dans lequel la tige (28) du composant de liaison (16) peut être insérée, en particulier peut être vissée.

12. Dispositif de fixation (10) selon la revendication 11, dans lequel la bande de serrage (12) présente en outre une deuxième patte de serrage (24) dans laquelle le deuxième élément de fixation (20) peut être inséré ou est intégré, la première patte de serrage (22) étant disposée en particulier à une première extrémité de la bande de serrage (12) et la deuxième patte de serrage (24) étant disposée en particulier à une deuxième extrémité de la bande de serrage (12), laquelle deuxième extrémité est opposée à la première extrémité.

13. Dispositif de fixation (10) selon l'une des revendications précédentes, dans lequel :
le premier élément de fixation (18) est réalisé sous la forme d'un boulon destiné à être inséré dans une patte de serrage (22) d'une bande de serrage (12) ; et/ou
le deuxième élément de fixation (20) est réalisé sous la forme d'un boulon destiné à être inséré dans une patte de serrage (24) d'une bande de serrage (12).

14. Dispositif de fixation (10) selon l'une des revendications précédentes, dans lequel la surface de contact (36) du composant de liaison (16) qui est au moins partiellement conique ou arrondie dans le plan de coupe et le jeu entre la tige (28) et le trou traversant (32) coopèrent de telle sorte que :
une modification d'un angle entre l'axe longitudinal (X1) de la tige (28) et l'axe longitudinal (X2) du trou traversant (32) en cas de mouvement relatif simultané entre les surfaces de contact (36, 38) est rendu possible tout en conservant un contact entre les surfaces de contact (36, 38) en particulier pendant un serrage du dispositif de fixation (10) ; et/ou
un décalage angulaire des axes longitudinaux des trous traversants (21, 36) des éléments de fixation (18, 20) est au moins partiellement compensé.

15. Véhicule automobile, en particulier véhicule utilitaire, doté d'un dispositif de fixation (10) selon l'une des revendications précédentes, dans lequel le dispositif de fixation (10) fixe un contenant (14), en particulier un réservoir de carburant ou un réservoir d'air comprimé, à un cadre du véhicule automobile.
